# EUROPÄISCHE PATENTSCHRIFT

(11) **EP 3 875 778 B1**
(45) Veröffentlichungstag und Bekanntmachung des Hinweises auf die Patenterteilung: **18.06.2025**
(21) Anmeldenummer: 21159863.6
(22) Anmeldetag: 01.03.2021
(51) Int. Cl.: F04D 29/58, F04D 25/08, F04D 29/52, F04D 29/38, F04D 19/00, F04D 29/70

(54) **VERBESSERTE ANLAGE ZUR LUFTBEHANDLUNG UND LÜFTEREINHEIT DAZU**
IMPROVED AIR TREATMENT SYSTEM AND FAN UNIT FOR SAME
INSTALLATION AMÉLIORÉE DE TRAITEMENT DE L'AIR ET UNITÉ DE VENTILATEUR ASSOCIÉE

(30) Priorität: 06.03.2020 DE 202020101263 U
(43) Veröffentlichungstag der Anmeldung: 08.09.2021
(73) Patentinhaber: Konvekta Aktiengesellschaft, 34613 Schwalmstadt-Ziegenhain (DE)
(72) Erfinder: Fink, Sebastian, 34613 Schwalmstadt-Ziegenhain (DE)
(74) Vertreter: Lindinger, Bernhard

(56) Entgegenhaltungen:
- EP-A2- 1 167 776
- EP-A2- 1 363 383
- CH-A- 94 630
- CN-B- 105 737 475
- CN-U- 207 333 298
- DE-A1- 102006 055 411
- DE-A1- 102012 108 449
- DE-A1- 102012 109 546
- US-A1- 2005 129 389

## Beschreibung

### Gebiet der Technik:

Die Erfindung betrifft Anlage zur Luftbehandlung für ein Fahrzeug umfassend mindestens eine Lüftereinheit mit zumindest als deren Bauteilen wenigstens einem Lüftermotor, wenigstens einem von einem Lüftermotor antreibbaren Lüfterrad und wenigstens einem Lüftergehäuse, wobei zumindest ein Oberflächenbereich der Anlage vorgesehen ist, einen Fahrzeugaußenflächenbereich zu bilden. Die Luftbehandlung kann das Heizen von Luft, das Kühlen von Luft oder lediglich das Fördern von Luft sein. Insbesondere werden derartige Anlagen als Lüftungs-, Klima- oder/und Heizungsanlage zum Positionieren auf oder teilintegriert in einem Fahrzeugdach eines bodengebundenen Fahrzeugs, wie einem Omnibus oder Schienenfahrzeug, eingesetzt. Aber auch der Einsatz als Kühlanlage in einem bodengebundenen Kühlfahrzeug, wie einem Kühllastkraftwagen, ist verbreitet. Ferner betrifft die Erfindung eine Lüftereinheit für eine derartige Anlage zur Luftbehandlung für ein Fahrzeug.

### Stand der Technik:

Bekannt sind eine Vielzahl von Anlage zur Luftbehandlung für ein Fahrzeug umfassend mindestens eine Lüftereinheit mit zumindest als deren Bauteilen wenigstens einem Lüftermotor, wenigstens einem von einem Lüftermotor antreibbaren Lüfterrad und wenigstens einem Lüftergehäuse, wobei zumindest ein Oberflächenbereich der Anlage vorgesehen ist, einen Fahrzeugaußenflächenbereich zu bilden. Beispielsweise ist in DE102006055411A1 eine derartige Anlage als Lüftungs-, Klima- oder/und Heizungsanlage für Fahrzeuge offenbart. Dort bildet die Lüftereinheit ein oder mehrere aneinandergefügte Lüftermodule mit jeweils einem Lüftermotor, einem als Rotor ausgebildetes Lüfterrad und einem Lüftermodulgehäuse. Das Lüftermodulgehäuse verfügt dort über eine Leiterbahn mit Steuer- und Stromleitungen, wobei Leitungsverbinder zu eventuell direkt angrenzenden Lüftermodulen existieren. Die Steuer- und Stromleitungen dienen dabei zur Stromversorgung und Steuerung des mindestens einen Lüftermotors. Jedoch besteht bei der in DE102006055411A1 offenbarten und den bisher bekannten Anlagen zur Luftbehandlung für ein Fahrzeug das Problem, dass im Winter bei Umgebungstemperaturen unter 0 °C die Gefahr des Festfrierens und/oder des durch Eis oder Schnee hervorgerufenen Blockierens des Lüfterrades am Lüftergehäuse besteht. Insbesondere kann ein Festfrieren der äußeren Enden der Rotorblätter des Lüfterrades am Wandring um das Lüfterrad auftreten. Wenn das Lüfterrad festgefroren und/oder durch Eis oder Schnee blockiert ist, fällt der Lüfter und damit die gewünschte Luftbehandlung aus. Es kann sogar dadurch zur Schädigung des Lüftermotors kommen. Die Behebung eines derartigen Ausfalls ist bei anhaltender Kälte bei bisherigen Anlagen zur Luftbehandlung für Fahrzeuge und im Speziellen bei der Lüftereinheit von bisherigen Anlagen normalerweise nur unter Einsatz von geeigneter Gerätschaft von außen möglich.

Die in CH94630A offenbarte Anlage zur Luftbehandlung verfügt über elektrisch mit Heizwicklungen betreibbare Heizkörper, die rings um den Schaufelkranz des Ventilators als Leitschaufelkranz angeordnet sind. Die DE102012108449A1 zeigt einen Wandring einer Lüftereinheit mit einem Lüfterrad, wobei ein elektrisch betreibbares Heizelement an der Innenseite des Wandrings positioniert ist. Die in CN105737475B offenbarte Lüftereinheit weist eine elektrisch betreibbare Heizeinrichtung auf, deren als Heizdrähte ausgebildeten Heizelemente auf der Oberfläche der Rotorblätter des Lüfterrades angeordnet sind.

Das Dokument EP1363383 A2 offenbart einen Axiallüfter mit einem dem Lüfterrad nachgeschalteten Heizgitter.

Der im Anspruch 1 angegebenen Erfindung liegt also das Problem zugrunde, dass die Wintertauglichkeit von bisherigen Anlagen zur Luftbehandlung für Fahrzeuge hinsichtlich der Lüftereinheit unzureichend beziehungsweise verbesserungswürdig ist.

Ein entsprechendes Problem liegt einer Lüftereinheit einer erfindungsgemäßen Anlage zur Luftbehandlung zugrunde.

### Zusammenfassung der Erfindung:

Das der im Anspruch 1 angegebenen Erfindung zugrundeliegende Problem wird mit den im Anspruch 1 aufgeführten Merkmalen gelöst. Dadurch dass die Anlage zur Luftbehandlung für ein Fahrzeug mindestens eine Lüftereinheit mit zumindest als deren Bauteilen wenigstens einem Lüftermotor, wenigstens einem von einem Lüftermotor antreibbaren Lüfterrad und wenigstens einem Lüftergehäuse umfasst, wobei zumindest ein Oberflächenbereich der Anlage vorgesehen ist, einen Fahrzeugaußenflächenbereich zu bilden, und wobei die mindestens eine Lüftereinheit wenigstens eine elektrisch betreibbare Heizeinrichtung derart ausgebildet aufweist, dass mindestens ein Heizelement der elektrisch betreibbaren Heizeinrichtung in einem jeweiligen über dem jeweiligen Lüfterrad angeordneten Fingerschutz angeordnet ist oder auf der Oberfläche des jeweiligen Fingerschutzes angeordnet ist, wird das Problem gelöst. Ein Lüfterrad weist Rotorblätter auf. Insbesondere das Lüfterrad eines Axiallüfters weist üblicherweise flügelartige Rotorblätter auf. Ein Lüfterrad der Lüftereinheit ist von dem ihm zugeordneten Lüftermotor zur Rotation antreibbar. Ein Bauteil der Lüftereinheit ist ein Fingerschutz über dem Lüfterrad Dadurch dass wenigstens ein Fingerschutz der Lüftereinheit mindestens ein Heizelement wenigstens einer elektrisch betreibbaren Heizeinrichtung umfasst, ist die Lüftereinheit beheizbar, so dass bei Außentemperaturen unter 0 °C der Gefahr des am Lüftergehäuses, wie insbesondere am Wandring, Festfrierens bzw. Blockierens des Lüfterrades entgegengewirkt werden kann. Sofern das Lüfterrad festgefroren ist und/oder durch Eis oder Schnee blockiert wird, kann durch Inbetriebnahme der elektrisch betreibbaren Heizeinrichtung das Lüfterrad auf einfache und schonende Weise schnell wieder frei rotieren. Der Einsatz von Gerätschaft von außen, um das Lüfterrad wieder frei zu bekommen, ist damit entbehrlich.

Durch die Anordnung der Heizeinrichtung im über dem jeweiligen Lüfterrad angeordneten Fingerschutz ist diese gegen das Festfrieren des Lüfterrades am Lüftergehäuse, wie insbesondere am Wandring, besonders wirksam einsetzbar.

In den Unteransprüchen sind vorteilhafte Ausgestaltungen, Weiterbildungen und Verbesserungen des jeweiligen Gegenstandes der Erfindung angegeben.

Vorzugsweise ist mindestens ein Heizelement von wenigstens einer der zumindest einen elektrisch betreibbaren Heizeinrichtung in den Rotorblättern des Lüfterrades der Lüftereinheit und/oder in einem jeweiligen um das jeweilige Lüfterrad angeordneten Wandring angeordnet.

Gemäß einer vorteilhaften Ausgestaltung ist die Anlage zur Luftbehandlung als Lüftungs-, Klima- oder/und Heizungsanlage zum Positionieren auf oder teilintegriert in einem Fahrzeugdach eines bodengebundenen Fahrzeugs ausgebildet. Gerade bei der bei derartigen Anlagen oben angeordneten Lüftereinheit ist der Witterungseinfluss durch beispielsweise Schnee und Eis besonders hoch, so dass dafür die Erfindung gegen das Festfrieren eines Lüfterrades am Lüftergehäuses und/oder gegen das Blockieren des Lüfterrades wegen Eis oder Schnee von besonderem Vorteil ist.

Gemäß einer weiteren vorteilhaften Ausgestaltung ist die Anlage zur Luftbehandlung als Kühlanlage für ein bodengebundenes Kühlfahrzeuge ausgebildet. Kühlfahrzeuge werden auch im Winter eingesetzt und die Kühlanlage ist mit der Lüftereinheit den äußeren Witterungseinflüssen direkt ausgesetzt, so dass die Erfindung dafür gut geeignet ist.

Vorzugsweise umfasst die Anlage zur Luftbehandlung eine Regelung ausgebildet zum Regeln der Heizleistung der wenigstens einen elektrisch betreibbaren Heizeinrichtung. Damit lässt sich je nach Bedarf angepasst an die äußeren Witterungsverhältnisse automatisch die Heizleistung für einen freien Lauf des Lüfterrades regeln. Dieses spart elektrische Energie.

Besonders vorteilhaft ist eine Ausgestaltung der Anlage zur Luftbehandlung, bei der die wenigstens eine elektrisch betreibbare Heizeinrichtung derart ausgebildet ist, dass sie mit Niederspannungsstrom mit Spannung von nicht mehr als 48 Volt betreibbar ist. So ist die Heizeinrichtung mit der üblichen an Bord eines Straßenfahrzeugs vorhandenen Stromversorgung betreibbar.

Gemäß einer vorteilhaften Ausgestaltung der Anlage zur Luftbehandlung umfasst die wenigstens eine elektrisch betreibbare Heizeinrichtung wenigstens eine Heizfolie. Heizfolie lässt sich gut an die Form von Gegenständen anpassen. Sie ist effektiv, relativ kostengünstig und einfach zu handhaben. Insbesondere auf der Oberfläche der und/oder in den Rotorblätter/n des Lüfterrades angeordnet ist sie um einem Festfrieren des Lüfterrades am Lüftergehäuse entgegenzuwirken besonders wirksam. Ebenfalls gut wirksam ist die Anordnung von mindestens einer der wenigstens einen Heizfolie auf der Oberfläche eines oder in einem jeweiligen Wandring um das jeweilige Lüfterrad und/oder auf der Oberfläche des oder im über dem jeweiligen Lüfterrad angeordneten Fingerschutz/es.

Bei einem als Axiallüfter ausgebildeten Lüfter ist häufig ein Wandring außen um die Spitzen der Rotorblätter des Lüfterrades angeordnet. Im vom Wandring umringten Bereich rotiert bei Betrieb das Lüfterrad. Zur Oberfläche eines Wandrings zählt auch seine dem Lüfterrad zugewandte Innenseite.

Nach einer weiteren vorteilhaften Ausgestaltung der Anlage zur Luftbehandlung umfasst die wenigstens eine elektrisch betreibbare Heizeinrichtung wenigstens ein integriertes Heizelement als einen Heizdraht. Diese ist eine effektive und einfache Ausgestaltung, bei der das die Heizeinrichtung umfassende Bauteil der Lüftereinheit direkt heizbar ist.

Der Heizdraht ist dabei im Bauteil integriert.

Vorteilhaft ist die Anordnung mindestens eines des wenigstens einen integrierten Heizelements im Lüftergehäuse.

Nach einer weiteren bevorzugten Ausführung der Erfindung besteht zumindest ein eine elektrisch betreibbare Heizeinrichtung umfassendes Bauteil der Lüftungseinheit zumindest teilweise aus einem elektrisch erwärmbaren Material, wobei das elektrisch erwärmbare Material die oder Bestandteil der elektrisch betreibbare/n Heizeinrichtung ist. Beispielsweise ist dafür ein intrinsisch leitfähiges Polymer als Zusatzstoff zu einem niedrig schmelzenden Polymer denkbar. Mit einer unter Einsatz eines elektrisch erwärmbaren Materials elektrisch betreibbaren Heizeinrichtung ist vorteilhaft ganz direkt mindestens ein Bauteil wie beispielsweise das Lüfterrad und/oder das Lüftergehäuse mittels elektrischen Stroms heizbar, so dass einem Festfrieren des Lüfterrades am Lüftergehäuse entgegengewirkt werden kann.

Gemäß einer bevorzugten Weiterbildung der Erfindung umfasst die Lüftereinheit ein oder mehrere zusammengefügte Lüftermodul/e mit als Bauteilen jeweils einem Lüftermotor, einem von einem Lüftermotor antreibbaren Lüfterrad und einem Lüftermodulgehäuse, wobei das eine oder die mehreren zusammengefügten Lüftermodulgehäuse das Lüftergehäuse bilden. Eine derartige Lüftereinheit lässt sich in Modulbauweise an die Größe und Leistungsstärke der jeweiligen Anlage zur Luftbehandlung einfach anpassen. Die Stromversorgung für die dem zumindest einen Bauteil der Lüftereinheit zugeordnete elektrisch betreibbare Heizeinrichtung ist nach einer möglichen Ausführung über Leitungen von in das jeweilige Lüftermodulgehäuse eingelassener Leiterbahn von Lüftermodul zu Lüftermodul mit entsprechenden Leitungsverbindern möglich. Das Prinzip von zu einer Lüftereinheit zusammengefügten Lüftermodulen mit ins Lüftermodulgehäuse eingelassenen Leiterbahnen ist in DE102006055411A1, dort jedoch für die Stromversorgung und Steuerung des Lüftermotors, offenbart.

Schließlich können die Merkmale der Unteransprüche zu Anspruch 1 im Wesentlichen frei miteinander und nicht durch die in den Ansprüchen vorliegende Reihenfolge festgelegt kombiniert werden, sofern sie unabhängig voneinander sind.

Das der im Anspruch 14 angegebenen Erfindung zugrundeliegende Problem wird mit den im Anspruch 14 aufgeführten Merkmalen gelöst. Dadurch dass die Lüftereinheit für eine erfindungsgemäße Anlage zur Luftbehandlung mit zumindest als Bauteilen wenigstens einem Lüftermotor, wenigstens einem von einem Lüftermotor antreibbaren Lüfterrad und wenigstens einem Lüftergehäuse umfasst, wobei die Lüftereinheit wenigstens eine elektrisch betreibbare Heizeinrichtung derart ausgebildet aufweist, dass mindestens ein Heizelement der elektrisch betreibbaren Heizeinrichtung in einem jeweiligen über dem jeweiligen Lüfterrad angeordneten Fingerschutz angeordnet ist oder auf der Oberfläche des jeweiligen Fingerschutzes angeordnet ist, wird das Problem gelöst. Eine derartige Lüftereinheit weist die entsprechenden Vorteile wie die erfindungsgemäße Anlage zur Luftbehandlung auf. Die vorteilhaften Ausführungen und Weiterbildungen der Lüftereinheit und deren Vorteile sind analog zu denen der vorteilhaften Ausführungen und Weiterbildungen der erfindungsgemäßen Anlage zur Luftbehandlung.

Kurze Beschreibung der Zeichnungen:
Anhand der Zeichnungen werden Ausführungsbeispiele der Erfindung erläutert.

### Es zeigen

Fig. 1a eine Darstellung der Unterseite eines nicht erfindungsgemäßen Ausführungsbeispiels einer Lüftereinheit für eine Anlage zur Luftbehandlung für ein Fahrzeug,
Fig. 1b einen vertikalen Schnitt quer durch ein Rotorblatt eines Lüfterrades der in Fig. 1a dargestellten Lüftereinheit,
Fig. 2 eine Darstellung der Unterseite eines weiteren nicht erfindungsgemäßen Ausführungsbeispiels einer Lüftereinheit für eine Anlage zur Luftbehandlung für ein Fahrzeug,
Fig. 3a eine Darstellung der Oberseite eines weiteren Ausführungsbeispiels einer Lüftereinheit für eine Anlage zur Luftbehandlung für ein Fahrzeug,
Fig. 3b einen vertikalen Schnitt quer durch einen Fingerschutz der in Fig. 3a dargestellten Lüftereinheit,
Fig. 4 ein Ausführungsbeispiel einer erfindungsgemäßen Anlage zur Luftbehandlung auf einem Fahrzeugdach eines bodengebundenen Fahrzeugs, und
Fig. 5 ein Ausführungsbeispiel einer erfindungsgemäßen Anlage zur Luftbehandlung ausgebildet als Kühlanlage für ein bodengebundenes Kühlfahrzeuge,

Ausführliche Beschreibung der Erfindung:
Alle Zeichnungen sind schematisch zu verstehen. Auf maßstabsgetreue Abbildungen wurde zum Zwecke erhöhter Klarheit der Darstellung verzichtet.

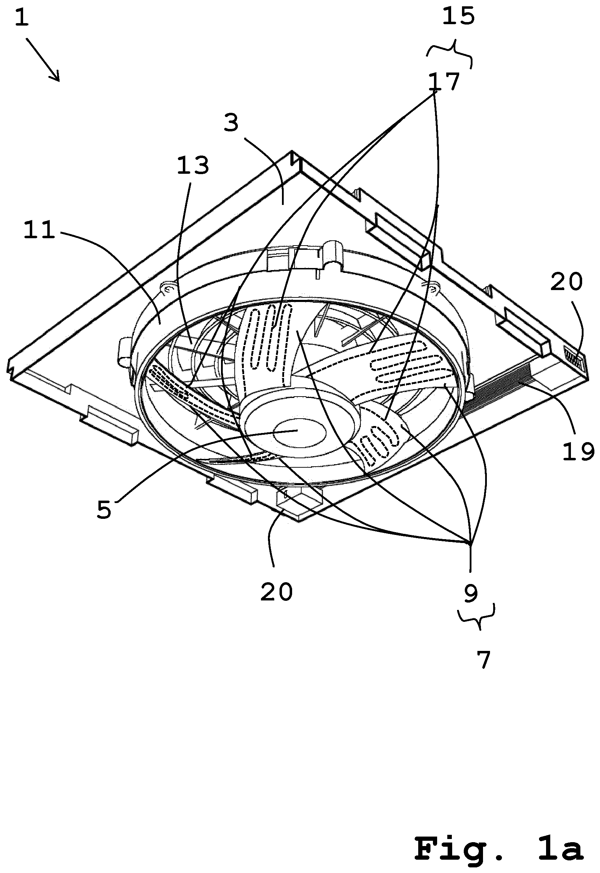

In Figur 1a ist die Unterseite eines Ausführungsbeispiels einer Lüftereinheit 1 für eine Anlage zur Luftbehandlung für ein Fahrzeug dargestellt. Die Lüftereinheit 1 ist als Lüftermodul ausgebildet. Als Bauteile verfügt die Lüftereinheit 1 insbesondere über ein als Lüftermodulgehäuse ausgebildetes Lüftergehäuse 3, einen elektrisch betreibbaren Lüftermotor 5 und ein Lüfterrad 7. Das Lüfterrad 7 verfügt ohne auf die Anzahl beschränkt zu sein über fünf Rotorblätter 9. Die Lüftereinheit 1 ist als Axiallüftereinheit für eine Lüftungs-, Klima- oder/und Heizungsanlage zum Positionieren auf oder teilintegriert in einem Fahrzeugdach eines bodengebundenen Fahrzeugs ausgebildet. Also ist zumindest ein Oberflächenbereich der Lüftungs-, Klima- oder/und Heizungsanlage vorgesehen, einen Fahrzeugaußenflächenbereich zu bilden. Das Lüfterrad 7 ist umringt von einem Wandring 11. Bei Betrieb rotiert das vom Lüftermotor 5 angetriebene Lüfterrad 7 innerhalb des nicht mitrotierenden Wandrings 11. Über dem Lüfterrad 7 befindet sich der Fingerschutz 13 mit seinen radial verlaufenden und seinen konzentrisch kreisförmig verlaufenden Streben. Das Lüfterrad 7 umfasst eine elektrisch betreibbare Heizeinrichtung 15 für jedes Rotorblatt 9. Dabei ist in jedem Rotorblatt 9 als Heizelement 17 ein Heizdraht integriert, der eingelassen im jeweiligen Rotorblatt 9 in Schlangenlinien verläuft. Denkbar ist auch eine Anordnung, bei der der Heizdraht isoliert auf der Oberfläche des jeweiligen Rotorblattes 9 verläuft. Auch andere geeignete elektrisch betreibbare Heizeinrichtungen 15 in oder auf den Rotorblättern 9, wie beispielsweise mit einer Heizfolie, sind denkbar. Ferner ist eine Ausführungsvariante der Lüftereinheit 1, bei der jedes Rotorblatt 9 des Lüfterrades 7 zumindest teilweise aus einem elektrisch erwärmbaren Material, wie zum Beispiel einem mit einem intrinsisch leitfähigen Polymer als Zusatzstoff versetzten Polymer besteht, wobei das elektrisch erwärmbare Material die oder Bestandteil der elektrisch betreibbare/n Heizeinrichtung 15 ist, denkbar. Als ein Beispiel wäre dafür Polyanilin als Zusatzstoff in Polypropylen zu nennen.

Die Heizeinrichtung 15 im Lüfterrad 7 ist so ausgelegt, dass sie mit elektrischem Strom mit Niederspannung von nicht mehr als 48 Volt, wie beispielsweise mit 12 Volt, 24 Volt oder 48 Volt, betreibbar ist. Die Stromversorgung ist über Stromleitungen in der Leiterband 19, weiter zum Lüftermotorbereich der Lüftereinheit 1 und von dort über beispielsweise übliche Schleifkontakte wie insbesondere Bürstenkontakte zur Heizeinrichtung 15 im Lüfterrad 7 möglich. Die Leiterbahn 19 verfügt an ihren Enden über Leitungsverbinder 20. Die als Lüftermodul ausgebildete Lüftereinheit 1 ist einzeln oder auch in beliebiger Anzahl an den Seiten ihres als Lüftermodulgehäuse ausgebildeten Lüftergehäuses 3 zusammengefügt für eine entsprechend dimensionierte Anlage zur Luftbehandlung für Fahrzeuge einsetzbar. Statt einer Leiterbahn 19 sind auch andere geeignete Arten von Stromleitungen zur elektrisch betreibbaren Heizeinrichtung 15 denkbar.

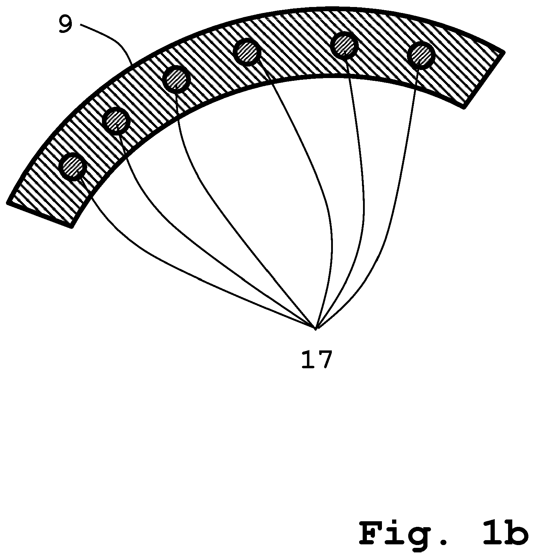

In Figur 1b ist ein vertikaler Schnitt quer durch ein Rotorblatt 9 eines Lüfterrades der in Fig. 1a dargestellten Lüftereinheit gezeigt. Darin ist als integriertes Heizelement 17 der elektrisch betreibbaren Heizeinrichtung ein Heizdraht in das elektrisch isolierende Kunststoffmaterial des Rotorblattes 9 integriert. Damit ist das Rotorblatt 9 über das Heizelement 17 elektrisch heizbar. Das als Heizdraht ausgebildete Heizelement 17 verläuft in diesem Fall im Rotorblatt 9 ohne darauf beschränkt zu sein in Schlangenlinien vom Anfangsbereich zum Rotorblattspitzenbereich mehrmals hin und jeweils wieder zurück. Denkbar ist als Variante beispielsweise eine im Kunststoff des Rotorblattes 9 sandwichartig eingebettete Heizfolie als integriertes Heizelement 17. Auch ist ein Rotorblatt 9, bei dem zum Beispiel die obere Hälfte aus einem elektrisch erwärmbaren Material besteht, wobei das elektrisch erwärmbare Material einen Bestandteil der elektrisch betreibbaren Heizeinrichtung darstellt, denkbar.

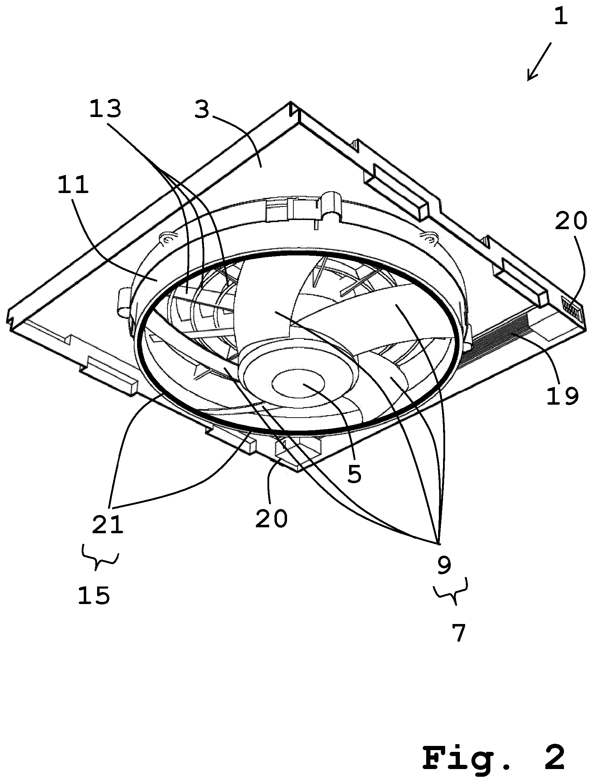

In Figur 2 ist eine Unterseite eines weiteren Ausführungsbeispiels einer Lüftereinheit 1 für eine Anlage zur Luftbehandlung für ein Fahrzeug dargestellt. Die Lüftereinheit 1 ist als Lüftermodul ausgebildet. Als Bauteile verfügt die Lüftereinheit 1 insbesondere über ein als Lüftermodulgehäuse ausgebildetes Lüftergehäuse 3, einen elektrisch betreibbaren Lüftermotor 5 und ein Lüfterrad 7. Das Lüfterrad 7 verfügt über Rotorblätter 9. Die Lüftereinheit 1 ist als Axiallüftereinheit für eine Lüftungs-, Klima- oder/und Heizungsanlage zum Positionieren auf oder teilintegriert in einem Fahrzeugdach eines bodengebundenen Fahrzeugs ausgebildet. Also ist zumindest ein Oberflächenbereich der Lüftungs-, Klima- oder/und Heizungsanlage vorgesehen, einen Fahrzeugaußenflächenbereich zu bilden. Denkbar ist beispielsweise auch eine derartige Lüftereinheit 1 für eine Kühlanlage eines bodengebundenen Kühlfahrzeugs. Über dem Lüfterrad 7 befindet sich der Fingerschutz 13**.** Das Lüfterrad 7 ist umringt von einem Wandring 11. Bei Betrieb rotiert das vom Lüftermotor 5 angetrieben Lüfterrad 7 innerhalb des nicht mitrotierenden Wandrings 11. Auf der Oberfläche des Wandrings 11 an dessen zu den Rotorblättern 9 zugewandten Innenseite befindet sich Heizfolie 21 als elektrische betreibbaren Heizeinrichtung 15. Der ansonsten aus Kunststoff bestehende Wandring 11 ist ein Bauteil der Lüftereinheit 1. Er ist fest mit dem Lüftergehäuse 3 verbunden. Denkbar ist als Variante beispielsweise auch die sandwichartig Einbettung der Heizfolie 21 im Kunststoff des Wandrings 11. Satt der Heizfolie 21 sind auch andere geeignete Arten von Heizelementen, wie beispielsweise ein im Wandring 11 integrierter Heizdraht, denkbar. Ferner ist als weitere Variante ein Wandring 11, der aus einem elektrisch erwärmbaren Material, wie zum Beispiel einem mit einem intrinsisch leitfähigen Polymer als Zusatzstoff versetzten Polymer, besteht, wobei das elektrisch erwärmbare Material die elektrisch betreibbare Heizeinrichtung 15 darstellt, denkbar. Die Heizeinrichtung 15 mit der Heizfolie 21 ist dazu ausgebildet, mit elektrischem Strom mit Niederspannung von nicht mehr als 48 Volt, wie beispielsweise 24 Volt, betrieben zu werden. Die Stromversorgung ist über Stromleitungen im Leiterband 19 der Lüftereinheit 1 und weiter zum Wandring 11 zur dortigen Heizfolie 21 möglich. Das Leiterband 19 verfügt an seinen Enden über Leitungsverbinder 20. Die als Lüftermodul ausgebildete Lüftereinheit 1 ist einzeln oder auch in beliebiger Anzahl an den Seiten ihres als Lüftermodulgehäuse ausgebildeten Lüftergehäuses 3 zusammengefügt für eine entsprechend dimensionierte Anlage zur Luftbehandlung für Fahrzeuge einsetzbar. Sie ist beispielsweise dort als eine Lüftereinheit 1 zum Abführen der Wärme aus einem Kondensator oder Gaskühler einer Fahrzeugklimaanlage an die Umgebungsluft angeordnet. Statt eine Leiterbahn 19 sind auch andere geeignete Arten von Stromleitungen zur elektrisch betreibbare Heizeinrichtung 15 denkbar.

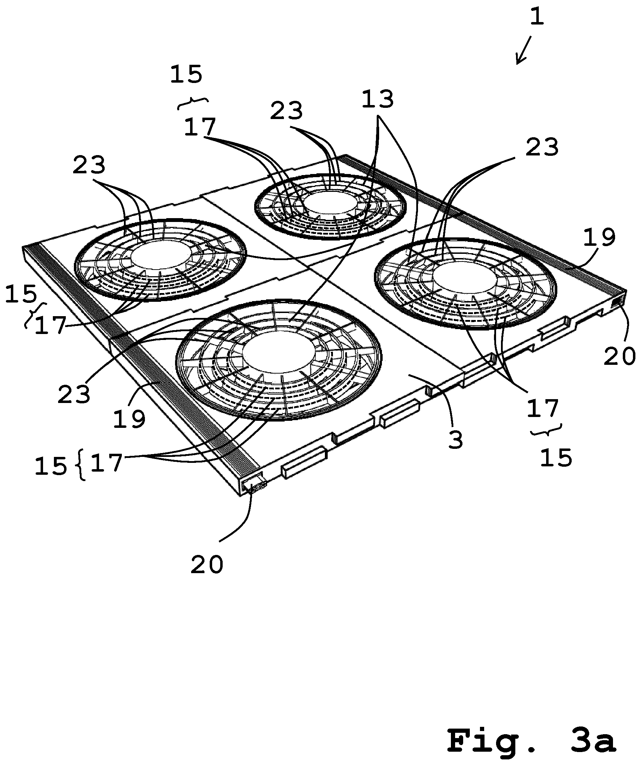

In Figur 3a ist von oben ein erfindungsgemäßes Ausführungsbeispiel einer Lüftereinheit 1 für eine Anlage zur Luftbehandlung für ein Fahrzeug, wie beispielsweise eine Fahrzeugaufdachanlage, gezeigt. Diese Lüftereinheit 1 ist aus vier aneinandergefügte Lüftermodulen zusammengesetzt. Die seitlich zusammengefügten Lüftermodulgehäuse bilden das Lüftergehäuse 3. Jedes der vier als Axiallüfter ausgestaltete Lüftermodule umfasst als Bauteile der Lüftereinheit 1 insbesondere in Figur 3a verdeckt jeweils einen Lüftermotor und jeweils ein vom jeweiligen Lüftermotor antreibbares Lüfterrad. Über jedem der vier Lüfterräder befindet sich als Bauteil ein Fingerschutz 13 mit radial verlaufenden und ringförmig konzentrisch verlaufenden Streben 23. Die Ausgestaltung der Fingerschutze 13 ist nicht darauf festgelegt, sondern kann auch andere geeignete Formen, wie beispielsweise die eines Gitters aus Längs- und Querstreben, aufweisen. Jeder der vier Fingerschutze 13 umfasst eine elektrisch betreibbare Heizeinrichtung 15 mit Heizdrähten als Heizelemente 17. Die Heizdrähte sind in den Streben 23 des jeweiligen Fingerschutzes 13 integriert, wie beispielsweise im Kunststoff der Streben 23 eingegossen. Denkbar ist zum Beispiel auch eine Umwicklung von einzelnen Streben 23 des Fingerschutzes 13 mit Heizdraht oder Heizfolie als elektrisch betreibbare Heizeinrichtung 15. Ferner ist eine sandwichartige Einbettung von Heizfolie in den Kunststoff der Streben 23 des jeweiligen Fingerschutzes 13 denkbar.

Auch ist als weitere Variante der Aufbau des Fingerschutzes 13 aus in der oberen Hälfte Spritzkunststoff und in der unteren Hälfte einem elektrisch erwärmbaren Material, wie zum Beispiel einem mit einem intrinsisch leitfähigen Polymer als Zusatzstoff versetztes Polymer, denkbar, wobei dann das elektrisch erwärmbare Material Bestandteil der elektrisch betreibbaren Heizeinrichtung 15 ist.

Die Heizeinrichtungen 15 mit dem jeweiligen als Heizdraht ausgebildeten Heizelement 17 sind dazu ausgelegt, mit elektrischem Strom mit Niederspannung von nicht mehr als 48 Volt, wie beispielsweise 24 Volt, betrieben zu werden. Es sind aber auch Ausführungen für höhere Stromspannungen denkbar. Die Stromversorgung ist über Stromleitungen in den Leiterbahnen 19 der Lüftereinheit 1 und weiter zum jeweiligen Fingerschutz 13 zum dortigen als Heizdraht ausgebildeten Heizelement 17 möglich. Jede Leiterbahn 19 verfügt dafür an seinen Enden über entsprechende Leitungsverbinder 20. Statt Leiterbahnen 19 sind auch andere geeignete Arten von Stromleitungen zu den elektrisch betreibbaren Heizeinrichtungen 15 in den Fingerschutzen 13 denkbar. Die Anzahl der Lüfterräder pro Lüftereinheit 1 ist nicht auf vier begrenzt sondern es sind je nach Größe der Anlage zur Luftbehandlung für Fahrzeuge mehr oder weniger Lüfterräder, wie beispielsweise auch nur ein einziges, möglich. Auch ist eine nicht erfindungsgemäße Ausführung denkbar, bei der sich die elektrisch betreibbare Heizeinrichtung 15 nicht im Fingerschutz 13 sondern in oder auf anderen Bereichen des Lüftergehäuses 3 oder im oder auf dem Gehäuse des Lüftermotors befindet. Ferner sind auch Kombinationen der in den Figuren 1a, 2 und 3a dargestellten Ausführungsbeispiele wie beispielsweise elektrisch betreibbare Heizeinrichtungen im jeweiligen Wandring und Fingerschutz realisierbar.

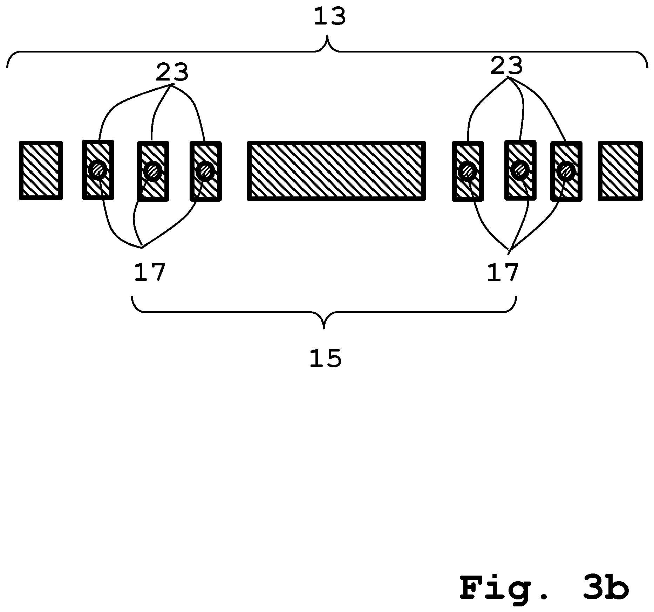

In Figur 3b ist einen vertikalen Schnitt quer durch einen Fingerschutz 13 der in Fig. 3a gezeigten Lüftereinheit dargestellt. In den konzentrisch angeordneten ringförmigen Streben 23 des Fingerschutzes 13 verläuft das als Heizdraht ausgebildete integrierte Heizelement 17 der elektrisch betreibbaren Heizeinrichtung 15. Der Heizdraht ist in den Kunststoff der Streben 23 des Fingerschutzes 13 eingebettet. Dadurch ist der Fingerschutz 13 als Bauteil der Lüftereinheit elektrisch heizbar.

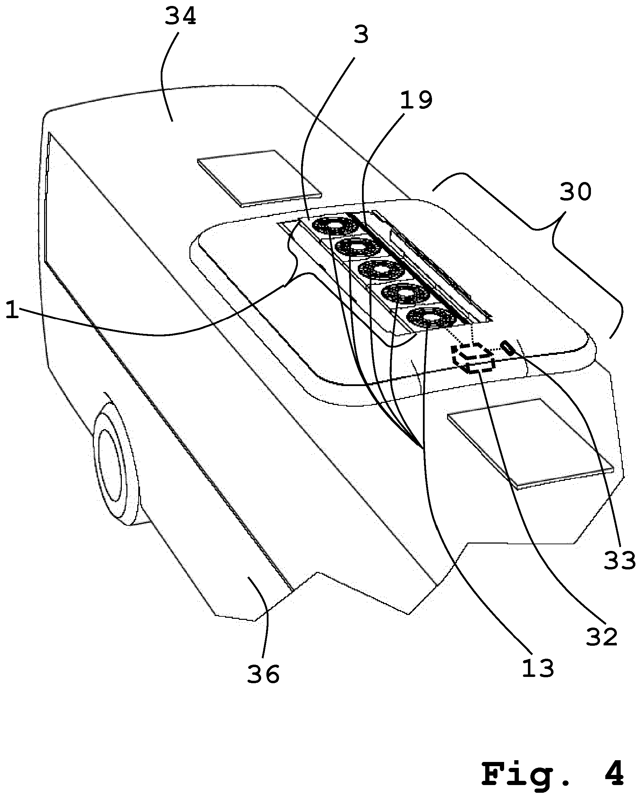

In Figur 4 ist ein Ausführungsbeispiel einer erfindungsgemäßen Anlage zur Luftbehandlung 30 auf einem Fahrzeugdach 34 eines bodengebundenen Fahrzeugs 36 gezeigt. Eine zum Positionieren teilintegriert im Fahrzeugdach 34 ausgebildete Variante der Anlage zur Luftbehandlung 30 ist ebenfalls möglich. Die Anlage zur Luftbehandlung 30 ist in diesem Fall eine Klima- und Heizungsanlage. Entsprechend ist auch eine Ausgestaltung als reine Klima- oder Heizungs- oder Lüftungsanlage denkbar. Zentral auf der Oberseite der Anlage zur Luftbehandlung 30 befindet sich eine Lüftereinheit 1 der Anlage 30. Diese dient in diesem Ausführungsbeispiel der Luftkühlung des Kondensators oder Gaskühlers der als Klima- und Heizungsanlage ausgebildeten Anlage zur Luftbehandlung 30. Die Lüftereinheit 1 hat fünf in das Lüftergehäuse 3 eingefügte längs in Reihe angeordnete Axiallüfter mit unter den fünf Fingerschutze 13 in Figur 4 verdeckten fünf Lüfterrädern, die jeweils einem elektrischen Lüftermotor zugeordnet und von diesem antreibbar sind. Die Anzahl der Lüfterräder samt Lüftermotoren ist je nach Größe der Anlage zur Luftbehandlung 30 unterschiedlich, so dass eine Ausführungsform beispielsweise nur ein Lüfterrad aufweisen kann.

Jeder der fünf Fingerschutze 13 ist ein Bauteil der Lüftereinheit 1 und umfasst eine elektrisch betreibbare Heizeinrichtung. Die jeweilige elektrisch betreibbare Heizeinrichtung im Fingerschutz 13 entspricht der zu Figur 3a und 3b beschriebenen. Ferner verfügt jeder der in Figur 4 verdeckten Wandringe um das jeweilige Lüfterrad über eine elektrisch betreibbare Heizeinrichtung wie zu Figur 2 beschrieben. Die Stromversorgung der elektrische betreibbaren Heizeinrichtungen der Fingerschutze 13 und Wandringe erfolgt von der fahrzeugeigenen Niederspannungsstromquelle, mit Spannung von beispielsweise 48 Volt, durch Leitungen der Leiterbahn 19 im Lüftergehäuse 3. Die Anlage zu Luftbehandlung 30 enthält eine Regelung 32 ausgebildet zum Regeln der Heizleistung der elektrisch betreibbaren Heizeinrichtungen in den Fingerschutzen 13 und den Wandringen. Die Regelung 32 empfängt Signale von einem Außentemperatursensor 33 und vom jeweiligen Lüftermotor, so dass bei Außentemperaturen von unter 0 °C und einem Blockieren des jeweiligen Lüfterrades die jeweiligen elektrisch betreibbaren Heizeinrichtungen zum Heizen mit Strom versorgt werden und dadurch das beispielsweise am Wandring festgefrorene Lüfterrad bei Betrieb wieder frei zum Rotieren kommt. Es sind auch Ausführungen der Anlage zur Luftbehandlung denkbar, die beispielsweise elektrisch betreibbare Heizeinrichtungen nur in den Fingerschutzen 13 der Lüftereinheit 1 enthalten. Das bodengebundene Fahrzeug 36 ist in diesem Fall ein Omnibus. Denkbar sind auch andere bodengebunden Fahrzeuge 36 mit einer erfindungsgemäßen Anlage zur Luftbehandlung wie beispielsweise ein Schienenfahrzeug.

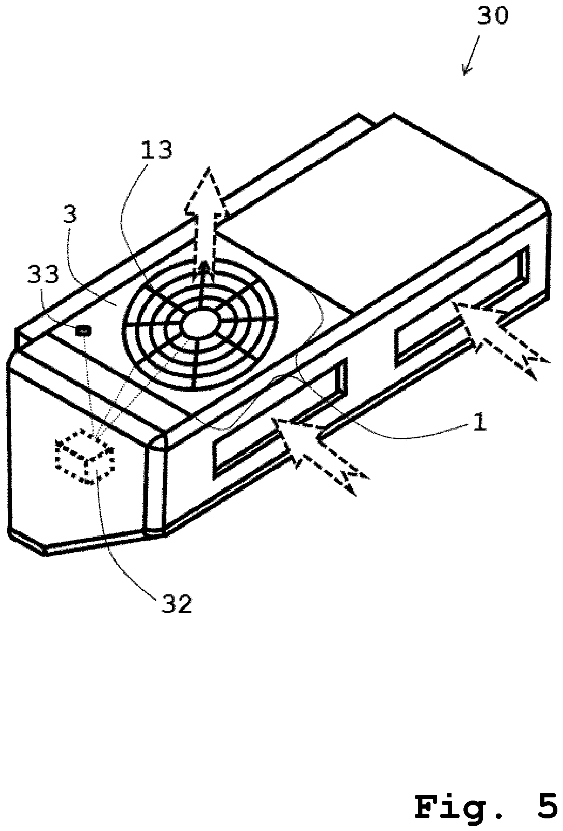

In Figur 5 ist ein Ausführungsbeispiel einer erfindungsgemäßen Anlage zur Luftbehandlung 30 ausgebildet als Kühlanlage für ein bodengebundenes Kühlfahrzeuge gezeigt. Die Lüftereinheit 1 der Anlage 30 ist an deren Oberseite angeordnet. Wie in Figur 5 ersichtlich ist ein Oberflächenbereich, wie insbesondere der Fingerschutz 13 der Lüftereinheit 1, vorgesehen, einen Fahrzeugaußenflächenbereich zu bilden. Die Lüftereinheit 1 verfügt über als Bauteile insbesondere einen in Figur 5 verdeckten Lüftermotor, ein vom Lüftermotor antreibbares Lüfterrad und ein Lüftergehäuse 3. Im Lüftergehäuse 3 ist ein Fingerschutz 13 über dem in Figur 5 verdeckten Lüfterrad positioniert. Das Lüfterrad umfasst eine elektrisch betreibbare Heizeinrichtung in seinen Rotorblättern wie zu Figuren 1a und 1b beschrieben. Die Regelung 32 zum Steuern der Heizleistung der Heizeinrichtung empfängt Signale von einem Außentemperatursensor 33 und vom jeweiligen Lüftermotor, so dass bei Außentemperaturen von unter 0 °C und einem Blockieren des Lüfterrades die elektrisch betreibbare Heizeinrichtung im Lüfterrad zum Heizen mit Strom versorgt wird und dadurch das beispielsweise am Lüftergehäuse 3 festgefrorene Lüfterrad bei Betrieb wieder frei zum Rotieren kommt. Ausführungsbeispiele von als Kühlanlagen für Kühlfahrzeuge ausgebildete Anlagen zur Luftbehandlung 30 mit einer Lüftereinheit 1 mit zwei oder mehr von einem jeweiligen Lüftermotor antreibbaren jeweils eine elektrisch betreibbare Heizeinrichtung umfassenden Lüfterrädern sind auch denkbar.

Zusätzlich sind elektrisch betreibbare Heizeinrichtungen beispielsweise im Wandring um das Lüfterrad wie zu Figur 2 beschrieben realisierbar.

## Patentansprüche

1. Anlage zur Luftbehandlung (30) für ein Fahrzeug umfassend mindestens eine Lüftereinheit (1) mit zumindest als deren Bauteilen wenigstens einem Lüftermotor (5), wenigstens einem von einem Lüftermotor (5) antreibbaren Lüfterrad (7) und wenigstens einem Lüftergehäuse (3), wobei zumindest ein Oberflächenbereich der Anlage (30) vorgesehen ist, einen Fahrzeugaußenflächenbereich zu bilden,
**dadurch gekennzeichnet, dass**
die mindestens eine Lüftereinheit (1) wenigstens eine elektrisch betreibbare Heizeinrichtung (15) derart ausgebildet aufweist,
dass mindestens ein Heizelement (17) der elektrisch betreibbaren Heizeinrichtung (15) in einem jeweiligen über dem jeweiligen Lüfterrad (7) angeordneten Fingerschutz (13) angeordnet ist oder auf der Oberfläche des jeweiligen Fingerschutzes (13) angeordnet ist.

2. Anlage zur Luftbehandlung (30) nach Anspruch 1 , **dadurch gekennzeichnet, dass** mindestens ein Heizelement (17) von wenigstens einer der zumindest einen elektrisch betreibbaren Heizeinrichtung (15) in den Rotorblättern des Lüfterrades (7) der Lüftereinheit (1) und/oder in einem jeweiligen um das jeweilige Lüfterrad (7) angeordneten Wandring (11) angeordnet ist.

3. Anlage zur Luftbehandlung (30) nach Anspruch 1 oder 2 , **dadurch gekennzeichnet, dass** sie als Lüftungs-, Klima- oder/und Heizungsanlage zum Positionieren auf oder teilintegriert in einem Fahrzeugdach (34) eines bodengebundenen Fahrzeugs (36) ausgebildet ist.

4. Anlage zur Luftbehandlung (30) nach Anspruch 1 oder 2 , **dadurch gekennzeichnet, dass** sie als Kühlanlage für ein bodengebundenes Kühlfahrzeug ausgebildet ist.

5. Anlage zur Luftbehandlung (30) nach einem der Ansprüche 1 bis 4 ,
**dadurch gekennzeichnet, dass** sie eine Regelung (32) ausgebildet zum Regeln der Heizleistung der wenigstens einen elektrisch betreibbaren Heizeinrichtung (15) umfasst.

6. Anlage zur Luftbehandlung (30) nach einem der Ansprüche 1 bis 5 ,
**dadurch gekennzeichnet, dass** die wenigstens eine elektrisch betreibbare Heizeinrichtung (15) derart ausgebildet ist, dass sie mit Niederspannungsstrom mit Spannung von nicht mehr als 48 Volt betreibbar ist.

7. Anlage zur Luftbehandlung (30) nach einem der Ansprüche 1 bis 6 ,
**dadurch gekennzeichnet, dass** die wenigstens eine elektrisch betreibbare Heizeinrichtung (15) als Heizelement (17) wenigstens eine Heizfolie (21) umfasst.

8. Anlage zur Luftbehandlung (30) nach Anspruch 7 ,
**dadurch gekennzeichnet, dass** mindestens eine der wenigstens einen Heizfolie (21) in den Rotorblättern (9) des Lüfterrades (7) angeordnet ist/sind.

9. Anlage zur Luftbehandlung (30) nach Anspruch 7 oder 8 ,
**dadurch gekennzeichnet, dass** mindestens eine der wenigstens einen Heizfolie (21) im Lüftergehäuse (3) angeordnet ist/sind.

10. Anlage zur Luftbehandlung (30) nach einem der Ansprüche 7 bis 9 ,
**dadurch gekennzeichnet, dass** mindestens eine der wenigstens einen Heizfolie (21) in einem jeweiligen Wandring (11) um das jeweilige Lüfterrad (7) angeordnet ist.

11. Anlage zur Luftbehandlung (30) nach einem der Ansprüche 1 bis 10 ,
**dadurch gekennzeichnet, dass** das wenigstens eine im Fingerschutz (13) integrierte Heizelement (17) der wenigstens einen elektrisch betreibbaren Heizeinrichtung (15) einen Heizdraht umfasst.

12. Anlage zur Luftbehandlung (30) nach einem der Ansprüche 1 bis 11 ,
**dadurch gekennzeichnet, dass** zumindest
ein eine elektrisch betreibbare Heizeinrichtung (15) umfassendes Bauteil der Lüftungseinheit (1) zumindest teilweise aus einem elektrisch erwärmbaren Material besteht, wobei das elektrisch erwärmbare Material die oder Bestandteil der elektrisch betreibbare/n Heizeinrichtung (15) ist.

13. Anlage zur Luftbehandlung (30) nach einem der Ansprüche 1 bis 12 , **dadurch gekennzeichnet, dass** die Lüftereinheit (1) ein oder mehrere zusammengefügte Lüftermodul/e mit als Bauteilen jeweils einem Lüftermotor (5), einem von einem Lüftermotor (5) antreibbaren Lüfterrad (7) und einem Lüftermodulgehäuse umfasst, wobei das eine oder die mehreren zusammengefügten Lüftermodulgehäuse das Lüftergehäuse (3) bilden.

14. Lüftereinheit (1) für eine Anlage zur Luftbehandlung (30) nach einem der Ansprüche 1 bis 13 mit zumindest als Bauteilen wenigstens einem Lüftermotor (5), wenigstens einem von einem Lüftermotor (5) antreibbaren Lüfterrad (7) und wenigstens einem Lüftergehäuse (3), **dadurch gekennzeichnet, dass** die Lüftereinheit (1) wenigstens eine elektrisch betreibbare Heizeinrichtung (15) derart ausgebildet aufweist,
dass mindestens ein Heizelement (17) der
elektrisch betreibbaren Heizeinrichtung (15) in einem jeweiligen über dem jeweiligen Lüfterrad (7) angeordneten Fingerschutz (13) angeordnet ist oder auf der Oberfläche des jeweiligen Fingerschutzes (13) angeordnet ist.

15. Lüftereinheit (1) nach Anspruch 14 , **dadurch gekennzeichnet, dass** mindestens ein Heizelement (17) von wenigstens einer der zumindest einen elektrisch betreibbaren Heizeinrichtung (15) in den Rotorblättern des Lüfterrades (7) der Lüftereinheit (1) und/oder in einem jeweiligen um das jeweilige Lüfterrad (7) angeordneten Wandring (11) angeordnet ist.

## Claims

1. Facility for air treatment (30) for a vehicle, comprising at least one fan unit (1) having at least as its components at least one fan motor (5), at least one fan wheel (7) that can be driven by a fan motor (5), and at least one fan housing (3), wherein at least one surface region of the facility (30) is provided to form a vehicle outer surface region,
**characterised in that** the at least one fan unit (1) comprises at least one electrically operable heating device (15) configured such that at least one heating element (17) of the electrically operable heating device (15) is arranged in a respective finger guard (13) arranged above the respective fan wheel (7) or is arranged on the surface of the respective finger guard (13).

2. Facility for air treatment (30) according to claim 1, **characterised in that** at least one heating element (17) of at least one of the at least one electrically operable heating device (15) is arranged in the rotor blads of the fan wheel (7) of the fan unit (1) and/or in a respective wall ring (11) arranged around the respective fan wheel (7).

3. Facility for air treatment (30) according to either claim 1 or claim 2, **characterised in that** it is configured as a ventilation, air-conditioning and/or heating facility for positioning on or partially integrated in a vehicle roof (34) of a ground-based vehicle (36).

4. Facility for air treatment (30) according to either claim 1 or claim 2, **characterised in that** it is configured as a cooling facility for a ground-based refrigerated vehicle.

5. Facility for air treatment (30) according to any of claims 1 to 4, **characterised in that** it comprises a controller (32) configured for controlling the heating power of the at least one electrically operable heating device (15).

6. Facility for air treatment (30) according to any of claims 1 to 5, **characterised in that** the at least one electrically operable heating device (15) is configured such that it is operable with low-voltage power of a voltage of no more than 48 volts.

7. Facility for air treatment (30) according to any of claims 1 to 6, **characterised in that** the at least one electrically operable heating device (15) comprises at least one heating film (21) as the heating element (17).

8. Facility for air treatment (30) according to claim 7, **characterised in that** at least one of the at least one heating film (21) is/are arranged in the rotor blades (9) of the fan when (7).

9. Facility for air treatment (30) according to either claim 7 or claim 8, **characterised in that** at least one of the at least one heating film (21) is/are arranged in the fan housing (3).

10. Facility for air treatment (30) according to any of claims 7 to 9, **characterised in that** at least one of the at least one heating film (21) is arranged in a respective wall ring (11) around the respective fan wheel (7).

11. Facility for air treatment (30) according to any of claims 1 to 10, **characterised in that** the at least one heating element (17) of the at least one electrically operable heating device (15), which element is integrated in the finger guard (13), comprises a heating wire.

12. Facility for air treatment (30) according to any of claims 1 to 11, **characterised in that** at least one component of the ventilation unit (1) comprising an electrically operable heating device (15) consists at least in part of an electrically heatable material, wherein the electrically heatable material is the or part of the electrically operable heating device (15).

13. Facility for air treatment (30) according to any of claims 1 to 12, **characterised in that** the fan unit (1) comprises one or more assembled fan module(s) each comprising, as components, a fan motor (5), a fan wheel (7) that can be driven by a fan motor (5), and a fan module housing, wherein the one or the plurality of assembled fan module housings form the fan housing (3).

14. Fan unit (1) for a facility for air treatment (30) according to any of claims 1 to 13 comprising, at least as components, at least one fan motor (5), at least one fan wheel (7) that can be driven by a fan motor (5), and at least one fan housing (3),
**characterised in that** the fan unit (1) comprises at least one electrically operable heating device (15) configured such that at least one heating element (17) of the electrically operable heating device (15) is arranged in a respective finger guard (13) arranged above the respective fan wheel (7) or is arranged on the surface of the respective finger guard (13).

15. Fan unit (1) according to claim 14, **characterised in that** at least one heating element (17) of at least one of the at least one electrically operable heating device (15) is arranged in the rotor blades of the fan wheel (7) of the fan unit (1) and/or in a respective wall ring (11) arranged around the respective fan wheel (7).

## Revendications

1. Installation de traitement d'air (30) pour un véhicule, comprenant au moins une unité formant ventilateur (1) avec, au moins en tant que ses composants, au moins un moteur de ventilateur (5), au moins une roue de ventilateur (7) pouvant être entraînée par un moteur de ventilateur (5) et au moins un carter de ventilateur (3), dans laquelle au moins une zone de surface de l'installation (30) est prévue pour former une zone de surface extérieure de véhicule, **caractérisée en ce que** l'au moins une unité formant ventilateur (1) présente au moins un dispositif de chauffage (15) à fonctionnement électrique réalisé de telle manière qu'au moins un élément de chauffage (17) du dispositif de chauffage (15) à fonctionnement électrique est disposé dans un protège-doigts (13) respectif disposé au-dessus de la roue de ventilateur (7) respective ou est disposé sur la surface du protège-doigts (13) respectif.

2. Installation de traitement d'air (30) selon la revendication 1, **caractérisée en ce qu'**au moins un élément de chauffage (17) d'au moins un de l'au moins un dispositif de chauffage (15) à fonctionnement électrique est disposé dans les pales de rotor de la roue de ventilateur (7) de l'unité formant ventilateur (1) et/ou dans un anneau mural (11) respectif disposé autour de la roue de ventilateur (7) respective.

3. Installation de traitement d'air (30) selon la revendication 1 ou 2, **caractérisée en ce qu'**elle est réalisée comme une installation de ventilation, de climatisation et/ou de chauffage destinée à être positionnée sur ou de manière partiellement intégrée dans un toit de véhicule (34) d'un véhicule (36) au sol.

4. Installation de traitement d'air (30) selon la revendication 1 ou 2, **caractérisée en ce qu'**elle est réalisée comme une installation de réfrigération pour un véhicule frigorifique au sol.

5. Installation de traitement d'air (30) selon l'une quelconque des revendications 1 à 4, **caractérisée en ce qu'**elle comprend un système de régulation (32) réalisé pour réguler la puissance de chauffage de l'au moins un dispositif de chauffage (15) à fonctionnement électrique.

6. Installation de traitement d'air (30) selon l'une quelconque des revendications 1 à 5, **caractérisée en ce que** l'au moins un dispositif de chauffage (15) à fonctionnement électrique est réalisé de telle manière qu'il peut fonctionner avec un courant basse tension avec une tension ne dépassant pas 48 volts.

7. Installation de traitement d'air (30) selon l'une quelconque des revendications 1 à 6, **caractérisée en ce que** l'au moins un dispositif de chauffage (15) à fonctionnement électrique comprend en tant qu'élément de chauffage (17) au moins une feuille de chauffage (21).

8. Installation de traitement d'air (30) selon la revendication 7, **caractérisée en ce qu'**au moins une de l'au moins une feuille de chauffage (21) est disposée dans les pales de rotor (9) de la roue de ventilateur (7).

9. Installation de traitement d'air (30) selon la revendication 7 ou 8, **caractérisée en ce qu'**au moins une de l'au moins une feuille de chauffage (21) est disposée dans le carter de ventilateur (3).

10. Installation de traitement d'air (30) selon l'une quelconque des revendications 7 à 9, **caractérisée en ce qu'**au moins une de l'au moins une feuille de chauffage (21) est disposée autour de la roue de ventilateur (7) respective dans un anneau mural (11) respectif.

11. Installation de traitement d'air (30) selon l'une quelconque des revendications 1 à 10, **caractérisée en ce que** l'au moins un élément de chauffage (17), intégré dans le protège-doigts (13), de l'au moins un dispositif de chauffage (15) à fonctionnement électrique comprend un fil chauffant.

12. Installation de traitement d'air (30) selon l'une quelconque des revendications 1 à 11, **caractérisée en ce qu'**au moins un composant, comprenant un dispositif de chauffage (15) à fonctionnement électrique, de l'unité de ventilation (1) est constitué au moins en partie d'un matériau pouvant être réchauffé électriquement, dans laquelle le matériau pouvant être réchauffé électriquement est le dispositif de chauffage (15) à fonctionnement électrique ou en fait partie intégrante.

13. Installation de traitement d'air (30) selon l'une quelconque des revendications 1 à 12, **caractérisée en ce que** l'unité formant ventilateur (1) comprend un ou plusieurs modules de ventilateur assemblés avec, en tant que composants, respectivement un moteur de ventilateur (5), une roue de ventilateur (7) pouvant être entraînée par un moteur de ventilateur (5) et un carter de module de ventilateur, dans laquelle le carter de module de ventilateur ou les plusieurs carters de module de ventilateur assemblés forment le carter de ventilateur (3).

14. Unité formant ventilateur (1) pour une installation de traitement d'air (30) selon l'une quelconque des revendications 1 à 13, avec, au moins en tant que composants, au moins un moteur de ventilateur (5), au moins une roue de ventilateur (7) pouvant être entraînée par un moteur de ventilateur (5) et au moins un carter de ventilateur (3),
caractérisée en que l'unité formant ventilateur (1) présente au moins un dispositif de chauffage (15) à fonctionnement électrique réalisé de telle manière qu'au moins un élément de chauffage (17) du dispositif de chauffage (15) à fonctionnement électrique est disposé dans un protège-doigts (13) respectif disposé au-dessus de la roue de ventilateur (7) respective ou est disposé sur la surface du protège-doigts (13) respectif.

15. Unité formant ventilateur (1) selon la revendication 14, **caractérisée en ce qu'**au moins un élément de chauffage (17) d'au moins un de l'au moins un dispositif de chauffage (15) à fonctionnement électrique est disposé dans les pales de rotor de la roue de ventilateur (7) de l'unité formant ventilateur (1) et/ou dans un anneau mural (11) respectif disposé autour de la roue de ventilateur (7) respective.
